# EUROPEAN PATENT APPLICATION

(11) **EP 4 768 375 A1**
(43) Date of publication of application: **01.07.2026**
(21) Application number: 25221832.6
(22) Date of filing: 09.12.2025
(51) Int. Cl.: B62J 1/08, B62M 6/55, B62K 19/34, B62J 23/00, B62J 45/00

(54) **ELECTRONIC SEATPOST FOR ELECTRICALLY POWER ASSISTED BICYCLE**

(30) Priority: 27.12.2024 TW 113214358 U
(71) Applicant: J.D Components Co., Ltd., Shou Shui Hsiang, Chang Hua Hsien 504 (TW)
(72) Inventor: FENG, Pin-Chieh, Chang Hua Hsien (TW); HUANG, Chun-Wei, Chang Hua Hsien (TW); SU, Fu-Sin, Chang Hua Hsien (TW); LIN, Yu-An, Chang Hua Hsien (TW)
(74) Representative: Straus, Alexander

(57) **Abstract**

An electronic seatpost (20) for an electrically power assisted bicycle (10), includes an outer tube (21), an inner tube (22) disposed in the outer tube (21) and movable upwardly and downwardly relative to the outer tube (21), a lifting assembly (23) mounted to the inner tube (22), and a wireless control module (24). The lifting assembly (23) includes a valve body, a valve member (231) disposed on the valve body, and a control motor (232) connected to the valve member (231). The wireless control module (24) includes a protective member (241) and a wireless unit (242) disposed in the protective member (241). The wireless unit (242) is electrically connected to the control motor (232) of the lifting assembly (23). The electrically power assisted bicycle (10) is equipped with a bracket (31) and an assist device mounted to the bracket (31). The wireless control module (24) is accommodated between the assist device and the bracket (31) so as to maintain signal transmission and to prevent the wireless unit (242) from being damaged by moisture or impact.

## Description

### FIELD OF THE INVENTION

The present invention relates to an electronic seatpost, and more particularly to an electronic seatpost for an electrically power assisted bicycle. The electronic seatpost comprises a wireless control module configured to control the raising and lowering of an electronic seatpost, wherein the wireless control module is disposed in a region capable of reliably receiving control signals and is covered to provide protection against damage.

### BACKGROUND OF THE INVENTION

An electrically power assisted bicycle provides a human-powered or motor-powered driving mode. A rider may choose to propel the electrically power assisted bicycle by pedaling, or may utilize a motor to provide different levels of power assistance so as to reduce physical exertion and increase riding range, thereby achieving both exercise and transportation purposes. Accordingly, electrically power assisted bicycles have become highly favored by modern riders. Conventional electrically power assisted bicycles are generally categorized into mid-drive motor systems and wheel hub motor systems. In mid-drive motor systems, the motor and the pedaling assembly are integrated and mounted at a bottom bracket portion of the bicycle frame, and the motor is secured by means of a motor bracket. Such an arrangement maintains the overall aesthetic appearance of the electrically power assisted bicycle and enhances riding stability and convenience.

Furthermore, in order to allow a rider to maintain a comfortable riding posture, current seatposts generally provide height-adjustable movement. Electrically power assisted bicycles typically employ an electronic cable-controlled device to operate a pneumatic valve or hydraulic valve of the seatpost. When the valve member is opened, the rider may apply downward force to the saddle to lower the seatpost, or the seatpost may automatically return to its original height. Taiwan Patent Nos. I671226 and I719576 disclose structures of electric seatpost assemblies in which an electric device having a wireless receiver is disposed around the electric seatpost and covered by a cover plate, wherein only a light-emitting element serving as a battery indicator is exposed.

It can be understood, from the foregoing prior patents, that when electronic components of an electronic seatpost are disposed on an outer side of the bicycle frame, additional shielding structures must be provided to cover the components so as to protect the components from directly contact with rainwater or mud and to prevent damage from moisture ingress or impact. However, in order to allow certain functions of the electronic components to be visible or perceptible to the rider, moisture may easily seep through the joints between the assembled components. As a result, moisture that accumulates in the shielding structure over time may cause the electronic components to become damp, potentially leading to short circuits and subsequent failure of the electronic components. Accordingly, it is desired to simplify the installation structure of the electronic seatpost for an electrically power assisted bicycle, thereby reducing or eliminating the requirement for additional shielding structures.

### SUMMARY OF THE INVENTION

The present invention has been accomplished in view of the above-noted circumstances. It is an objective of the present invention to provide an electronic seatpost for electrically power assisted bicycles, in which the electronic components of the electronic seatpost are disposed at a location capable of reliably receiving and transmitting signal, while also eliminating the need for additional shielding structures.

To attain the above objective, the present invention provides an electronic seatpost for electrically power assisted bicycles, which comprises an outer tube, an inner tube, a lifting assembly, and a wireless control module. The inner tube is disposed in the outer tube and is moveable upwardly and downwardly relative to the outer tube. The lifting assembly is mounted to the inner tube and includes a valve body, a valve member disposed on the valve body, and a control motor connected to the valve member. The control motor drives the valve member so as to control opening and closing of the valve body. The wireless control module includes a protective member and a wireless unit disposed in the protective member. The wireless unit is electrically connected to the control motor of the lifting assembly. The electrically power assisted bicycle is provided with a bracket and an assist device mounted to the bracket. The wireless control module is accommodated between the assist device and the bracket.

By virtue of the foregoing technical features, because the wireless control module of the electronic seatpost is directly disposed between the assist device and the bracket originally equipped in the electrically power assisted bicycle, i.e., the wireless control module is accommodated in the space between the assist device and the bracket, no additional shielding structure is required for accommodating the wireless control module, and the wireless control module is still able to receive control signals smoothly. Furthermore, the wireless unit of the wireless control module is disposed in the protective member, thereby preventing the wireless unit from being exposed to the external environment. As a result, the wireless unit is protected in a waterproof and dustproof environment, thereby extending the service life of the wireless control module.

Preferably, the assist device comprises a power module and a transmission module connected to the power module, so that the power module outputs auxiliary power, which is transmitted through the transmission module to the pedals operated by the rider.

Preferably, the wireless control module is located in an accommodating space defined among the power module, the transmission module, and the bracket. Accordingly, since the space originally provided for configurating the power module and the transmission module of the electrically power assisted bicycle is effectively utilized, structural modification can be avoided.

Preferably, the accommodating space is located outside an operating range of the power module and the transmission module of the electrically power assisted bicycle. Since the power module has a specified operating range when transmitting power to the transmission module, the region outside the operating range can be utilized as the accommodating space for receiving the wireless control module, thereby allowing the wireless control module to transmit and receive control signals smoothly.

Preferably, the wireless unit of the wireless control module comprises a Bluetooth receiver and a controller electrically connected to the Bluetooth receiver. The Bluetooth receiver is configured to receive control signals from an operating lever for raising or lowering the seatpost, and to transmit the control signals to the controller, such that the controller drives the valve member of the seatpost to open or close the valve body, thereby achieving adjustment of the seatpost height.

Preferably, the protective member of the wireless control module, which encloses the wireless unit, is made of an industrial foam material or a rubber material. In this way, since the protective member is formed of a material having waterproof and dustproof properties, the wireless unit enclosed by the protective member is prevented from contacting moisture and dirt, thereby not only prolonging the service life of the wireless control module but also maintaining stable signal transmission and reception performance.

Preferably, the assist device includes a side cover configured to close a gap between the assist device and the bracket. In this way, the side cover prevents the power module and the transmission module from being exposed to the external environment, and additionally provides protection for the wireless control module.

The detailed structure, features, assembly, and usage of the electronic seatpost for an electrically power assisted bicycle provided by the present invention will be described in the following detailed description of embodiments. However, it should be understood by those skilled in the art that the detailed descriptions and specific embodiments are given by way of illustration only, and are not meant to limit the scope of the present invention.

### BRIEF DESCRIPTION OF DRAWINGS

FIG. 1 is a perspective view of an electronic seatpost accordingly to one embodiment of the present invention.
FIG. 2 is a partial cross-sectional view of the electronic seatpost of FIG. 1, illustrating a portion of the electronic seatpost.
FIG. 3 is a perspective view of a portion of an electrically power assisted bicycle fitted with a wireless control module of the electronic seatpost of the present invention.
FIG. 4 is a cross-sectional view, illustrating the installation position of the wireless control module.

### DETAILED DESCRIPTION OF THE INVENTION

It is to be noted that, in the embodiments and drawings described below, identical reference numerals refer to identical or similar elements or structural features. In addition, the elements and structures shown in the drawings are provided for convenience of explanation and are not drawn to actual scale or quantity. Moreover, where practicable, features of different embodiments may be applied interchangeably. When an element is described as being "disposed on" another element, it indicates that the element may be disposed directly on the other element or indirectly on other element, i.e., with one or more additional elements interposed therebetween. Conversely, when an element is described as being "directly disposed" on another element, it indicates that no additional elements are interposed between the two elements.

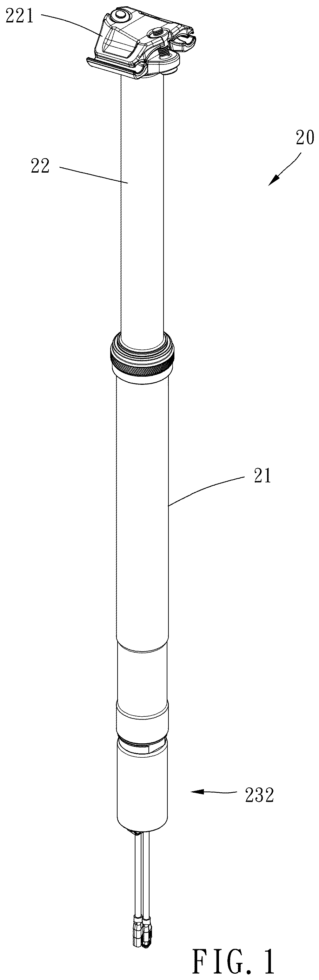

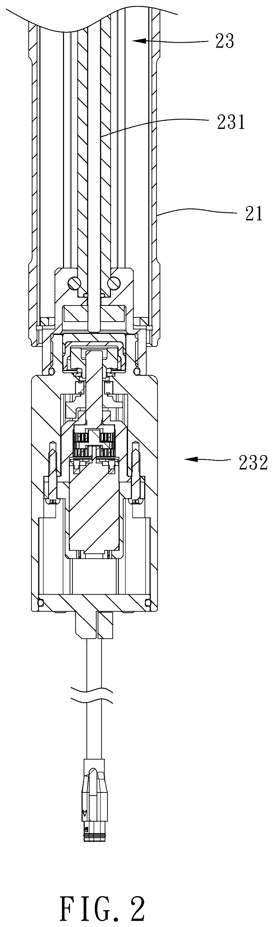

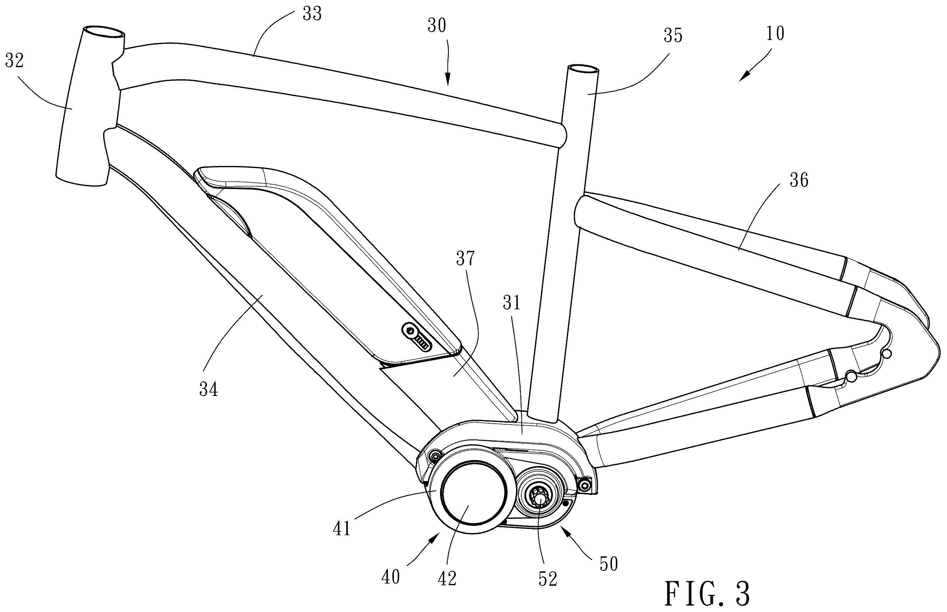

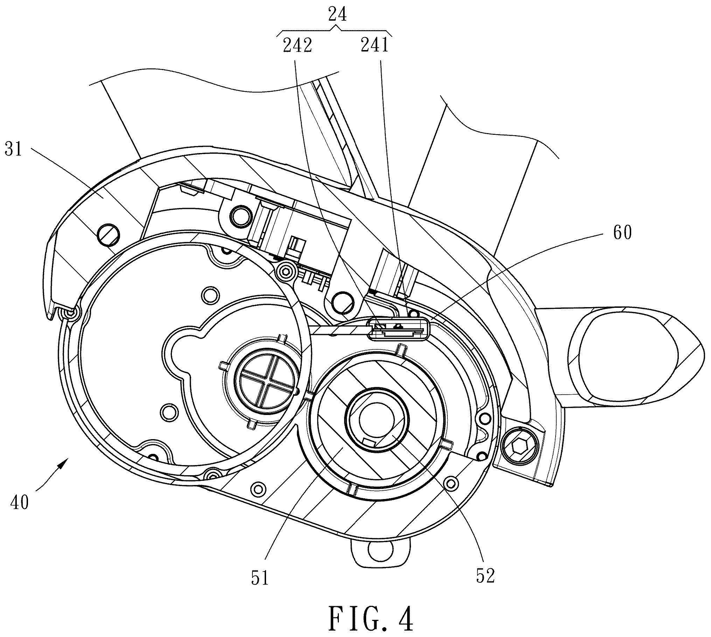

Referring to FIGS. 1 to 4, an electronic seatpost 20 for an electrically power assisted bicycle 10 provided by one embodiment of the present invention comprises an outer tube 21, an inner tube 22, a lifting assembly 23, and a wireless control module 24. The electrically power assisted bicycle 10 comprises a frame structure 30 and an assist device. The assist device includes a power module 40, a transmission module 50, and an accommodating space 60.

The inner tube 22 is inserted in the outer tube 21. A top end of the inner tube 22 is connected to a saddle mounting seat 221, and a bottom end of the inner tube 22 is assembled inside the outer tube 21. When the lifting assembly 23 is activated, the inner tube 22 is adjustable upward and downward, thereby moving vertically relative to the outer tube 21.

The lifting assembly 23 is disposed in the inner tube 22 and includes a valve body, a valve member 231, and a control motor 232. The valve member 231 extends through the valve body, and the control motor 232 is connected to one end of the valve member 231, for example, through a shaft. The control motor 232 drives the valve member 231 through the shaft, causing the valve member 231 to move upward and downward in the valve body, thereby controlling opening and closing of the valve body. The valve body typically has two oil chambers or two air chambers that permit fluid flow. When the valve body is in an open state, fluid flows between the chambers, enabling adjustment of the height of the inner tube 22.

The wireless control module 24 is received in the accommodating space 60 and includes a protective member 241 and a wireless unit 242. The protective member 241 is made of an industrial foam material or a rubber material. The wireless unit 242 includes a Bluetooth receiver and a controller electrically connected to the Bluetooth receiver. The controller is further electrically connected to the control motor 232 of the lifting assembly 23. Control signals received by the Bluetooth receiver are transmitted to the controller, and the controller drives the control motor 232 of the lifting assembly 23 in accordance with the control signals. The wireless unit 242 is disposed in the protective member 241 and thereby enclosed by the protective member 241, preventing moisture and dirt from contacting the wireless unit 242 and reducing the likelihood of damage.

The frame structure 30 may comprise, for example, a bracket 31, a head tube 32, a top tube 33, a down tube 34, a seat tube 35, a rear fork assembly 36, and a battery mounting portion 37. The bracket 31 is disposed at a first end of the down tube 34, a first end of the seat tube 35, and a first end of the rear fork assembly 36. The head tube 32 is connected to a second end of the down tube 34 and to a first end of the top tube 33. The seat tube 35 is connected to a second end of the top tube 33 and to a second end of the rear fork assembly 36. In practice, the electronic seatpost 20 is received in the seat tube 35. The battery mounting portion 37 is provided on the down tube 34. A front-fork steerer tube and a handlebar assembly are respectively mounted to the head tube 32, and the front-fork steerer tube supports a front wheel assembly. A rear wheel assembly is mounted to the rear fork assembly 36. A battery is mounted to the battery mounting portion 37 and electrically connected to the control motor 232 of the wireless control module 24, thereby completing assembly of the electrically power assisted bicycle 10.

The power module 40 of the assist device may comprise a housing 41, a side cover 42, and a mid-drive motor assembly. The housing 41 is fixed to the bracket 31, and the mid-drive motor assembly is received in the housing 41. The side cover 42 is installed to close a gap between the assist device and the bracket 31, so as to prevent exposure of the mid-drive motor assembly. The mid-drive motor assembly receives electrical power from the battery mounted on the battery mounting portion 37 and outputs auxiliary power when activated.

The transmission module 50 of the assist device may include a transmission mechanism 51 and a crankshaft 52. The transmission mechanism 51 is accommodated in the housing 41 of the power module 40. The transmission mechanism 51 may be one or more gears engaged with a reducer of the mid-drive motor assembly. The gear(s) is/are directly or indirectly connected to the crankshaft 52, which is mounted with pedals. That way, auxiliary power output from the mid-drive motor assembly is transmitted through the reducer and the gears to the crankshaft 52. The mid-drive motor assembly and the transmission mechanism 51 have a specified operating range, and a region in the housing 41 outside the operating range defines the accommodating space 60. The wireless control module 24 is received in the accommodating space 60 within the housing 41. With the protective member 241 and the side cover 42, the wireless control module 24 can be better protected.

When a rider rides on the electrically power assisted bicycle 10, the rider may actuate an operating lever mounted on the handlebar. In the present embodiment, the operating lever is connected to a Bluetooth transmitter, which converts movement of the operating lever into a control signal. The control signal is transmitted by the Bluetooth transmitter to the Bluetooth receiver of the wireless unit 242 of the wireless control module 24. Because the signals can be smoothly transmitted to the accommodating space 60, the wireless unit 242 can reliably receive the control signal. The Bluetooth receiver then transmits the control signals to the controller, which outputs an actuation signal to the control motor 232 of the lifting assembly 23. The control motor 232 operates, directly or indirectly driving the valve member 231, thereby controlling opening and closing of the valve body. As a result, the rider can adjust the height of the electronic seatpost 20 as desired.

In conclusion, because the wireless control module 24 of the electronic seatpost 20 is disposed in the space between the assist device and the bracket of the electrically power assisted bicycle 10, the region originally used for the assist device can be effectively utilized. No additional shielding structure is required, thereby eliminating the cost associated with structural modifications. Moreover, since the wireless unit 242 is enclosed by the protective member 241, it is provided with waterproof and dustproof protection, preventing damage from moisture or impact. Compared with the prior art, the present invention has the advantages of reduced cost and extended service life.

## Claims

1. An electronic seatpost (20) for an electrically power assisted bicycle (10), the electrically power assisted bicycle (10) comprising an assist device mounted to a bracket (31) of the electrically power assisted bicycle (10), the electronic seatpost (20) comprising:
an outer tube (21);
an inner tube (22) disposed in the outer tube (21) and configured to move upward and downward relative to the outer tube (21);
a lifting assembly (23) mounted to the inner tube (22) and comprising a valve body, a valve member (231) disposed on the valve body, and a control motor (232) connected to the valve member (231); the control motor (232) driving the valve member (231) to control opening and closing of the valve body; and
a wireless control module (24) accommodated between the assist device and the bracket (31), the wireless control module (24) comprising a protective member (241) and a wireless unit (242) disposed in the protective member (241), the wireless unit (242) being electrically connected to the control motor (232) of the lifting assembly (23).

2. The electronic seatpost (20) for the electrically power assisted bicycle (10) as claimed in claim 1, wherein the assist device comprises a power module (40) and a transmission module (50) connected to the power module (40).

3. The electronic seatpost (20) for the electrically power assisted bicycle (10) as claimed in claim 2, wherein the wireless control module (24) is located in an accommodating space (60) defined among the power module (40), the transmission module (50), and the bracket (31).

4. The electronic seatpost for the electrically power assisted bicycle as claimed in claim 3, wherein the accommodating space (60) is located outside an operating range of the power module (40) and the transmission module (50) of the electrically power assisted bicycle (10).

5. The electronic seatpost (20) for the electrically power assisted bicycle (10) as claimed in claim 1, wherein the wireless unit (242) of the wireless control module (24) comprises a Bluetooth receiver and a controller electrically connected to the Bluetooth receiver.

6. The electronic seatpost (20) for the electrically power assisted bicycle (10) as claimed in claim 1, wherein the protective member (241) of the wireless control module (24) is made of an industrial foam material or a rubber material and encloses the wireless unit (242).

7. The electronic seatpost (20) for the electrically power assisted bicycle (10) as claimed in claim 1, wherein the assist device comprises a side cover (42) configured to close a gap between the assist device and the bracket (31).
